# EUROPÄISCHE PATENTSCHRIFT

(11) **EP 0 385 249 B1**
(45) Veröffentlichungstag und Bekanntmachung des Hinweises auf die Patenterteilung: **20.01.1993**
(21) Anmeldenummer: 90103320.9
(22) Anmeldetag: 21.02.1990
(51) Int. Cl.: C09C 1/00

(54) **Beigebraune Einschlusspigmente und Verfahren zu ihrer Herstellung**
Beige-brown mixed-phase pigments and process for manufacturing them
Pigments à phases mixtes d'un beige brunâtre et procédé de préparation

(30) Priorität: 03.03.1989 DE 3906821
(43) Veröffentlichungstag der Anmeldung: 05.09.1990
(73) Patentinhaber: DEGUSSA AKTIENGESELLSCHAFT, 60311 Frankfurt (DE)
(72) Erfinder: Speer, Dietrich, Dr., D-6450 Hanau 9 (DE); Kiss, Akos, Dr., D-8755 Wasserlos (DE); Kleinschmit, Peter, Dr., D-6450 Hanau (DE)

(56) Entgegenhaltungen:
- DE-C- 2 143 525
- FR-A- 2 183 824
- FR-A- 2 245 741

## Beschreibung

Die Erfindung betrifft beigebraune Einschlußpigmente auf der Basis von Zirkoniumsilikat als Hüllsubstanz, in die farbige Verbindungen als diskrete Phasen eingeschlossen sind, und ein Verfahren zur Herstellung dieser Einschlußpigmente.

Einschlußpigmente sind beispielsweise aus der DE-PS 23 12 535 bekanntgeworden. Sie bestehen aus durchsichtigen Kristallen von glasurstabilen Substanzen, wie beispielsweise Zirkoniumsilikat, Zirkoniumoxid oder Zinnoxid, in die anorganische, wasserfreie, farbige Verbindungen als diskrete Phase eingeschlossen sind. Als farbige Verbindungen werden Thenardsblau, Titangelb und insbesondere Cadmiumgelb und Cadmiumrot genannt. Bekannt ist auch das Zirkoneisen-Rosa mit Fe₂O₃-Einschlüssen in einer Zirkoniumsilikathülle. Die Herstellung dieser Einschlußpigmente erfolgt durch Erhitzen der Hüllsubstanzen bzw. deren Ausgangsprodukte und der einzuschließenden farbigen Substanzen, bzw. deren Ausgangsprodukte in Anwesenheit von Mineralisatoren auf Temperaturen bis 1200° C. Allerdings hat es sich herausgestellt, daß mit diesem Verfahren nicht alle denkbaren farbigen Verbindungen in die Hüllsubstanzen in nennenswerter Ausbeute eingeschlossen werden können.

Die Palette der Braunfarben ist nicht sehr groß. Braunkörper erhält man im wesentlichen aus Eisenoxiden in Verbindung mit anderen Oxiden, wie z.B. Manganoxid, Zinkoxid, Nickeloxid oder Kobaltoxid. Braune Einschlußpigmente sind bisher nicht bekannt geworden.

Es war daher Aufgabe der vorliegenden Erfindung, beigebraune Einschlußpigmente aus farblosen Kristallen aus Zirkoniumsilikat, in welchen farbige Verbindungen als diskrete Phase eingeschlossen sind, zu finden und ein Verfahren zur Herstellung dieser Einschlußpigmente zu entwickeln, mit dem eine relativ hohe Ausbeute erzielbar ist.

Diese Aufgabe wird erfindungsgemäß dadurch gelöst, daß als farbige Verbindungen kristalline Eisentitanate der Zusammensetzung Fe₂TiO₅ eingeschlossen sind.

Diese Pigmente zeigen eine beigebraune Farbe, wobei unterschiedliche Farbnuancen durch unterschiedliche Einschlußmengen, Teilchenformen und Teilchengrößen der eingeschlossenen Kristallite erhalten werden können.

Die beigebraunen Einschlußpigmente sind erhältlich durch Glühen eines zuvor gemahlenen Gemisches aus Zirkoniumoxid, Siliziumdioxid und Ausgangsverbindungen der einzuschließenden farbgebenden Verbindungen in Anwesenheit von Mineralisatoren bei 800 bis 1300 °C, wobei das Verfahren dadurch gekennzeichnet ist, daß man Zirkoniumoxide mit einer Korngrößenverteilung (D50-Wert) von vorzugsweise gleich oder kleiner 5 µm und einer spezifischen Oberfläche von gleich oder größer 4 m²/g verwendet und als Ausgangsverbindungen der einzuschließenden farbgebenden Verbindung Eisen- und Titanoxide oder bei höheren Temperaturen unter oxidierenden Bedingungen Oxide bildende Eisen- und Titanverbindungen einsetzt und das verdichtete Gemisch unter oxidierenden Bedingungen 0,5 bis 8 Stunden glüht.

Als Eisen- und Titanverbindungen werden entweder die Oxide, wie z. B. FeO, Fe₂O₃, Fe₃O₄ und TiO₂ eingesetzt, oder Verbindungen, die bei höheren Temperaturen unter oxidierenden Bedingungen Oxide bilden, wie z. B. Titanylverbindungen. Prinzipiell können auch Eisentitanate der Formel Fe₂TiO₅ eingesetzt werden, sofern diese in ausreichender Feinheit zur Verfügung stehen. Als Mineralisatoren verwendet man üblicherweise Alkali-oder Erdalkalihalogenide, vorzugsweise Alkalifluoride oder Erdalkalifluoride und Alkalisilikofluoride.

Man erhält so beigebraune Einschlußpigmente, die Fe₂TiO₅-Einschlüsse aufweisen, wie röntgenographisch und rasterelektronenmikroskopisch nachweisbar ist. Die Ausbeuten an verwertbaren Pigmenten liegen bei 90% und höher. Vorzugsweise liegt die mittlere Teilchengröße der Einschlußpigmente im Bereich von 5 bis 10 µm. Die farbgebenden, vollständig von der ZrSiO₄-Kristallhülle umgebenen Fe₂TiO₅-Einschlüsse weisen eine wesentlich geringere Teilchengröße - im allgemeinen unter 1 µm - auf.

Vorzugsweise werden möglichst feinteilige Eisenoxide (Fe₂O₃) eingesetzt. Gut verwendbar sind handelsübliche Eisen(III)-oxide mit D50-Werten von 0,2 bis 0,7 µm und spezifischen Oberflächen von 13 bis 24 m²/g (wie bei ZrO₂ geometrisch aus der Kornverteilung ermittelt) eingesetzt. Vorzugsweise wird Titandioxid als Titanverbindung eingesetzt, wobei ein möglichst feinteiliges, insbesondere unter 1 µm, bevorzugt wird. Es ist von besonderem Vorteil, wenn pyrogene Titanoxide verwendet werden, insbesondere aus einem Gemisch von Anatas und Rutil mit wenigstens 20 Gew.-% Rutilanteil; pyrogenes TiO₂ weist herstellungsbedingt oft eine Primärteilchengröße um 20 bis 30 nm auf.

Zirkonoxid und Siliziumdioxid werden im wesentlichen in äquivalenten Mengen eingesetzt. Das zu glühende Gemisch wird vor dem Glühprozeß gemahlen, etwa in einer Kugelmühle oder anderen Intensivmühlen. Das Glühen kann in üblichen Öfen, wie beispielsweise in Stempel-, Kammer- oder Durchlauföfen erfolgen. Wenngleich es sich als sehr vorteilhaft erwiesen hat, wenn die Aufheizrate beim Glühen der Mischungen 400 bis 750° C/h, vorzugsweise 450 bis 550° C/h, beträgt, kann die Aufheizrate auch außerhalb dieser Grenzen liegen. Bei einer Glühtemperatur im bevorzugten Bereich von 1000 bis 1200 °C ist eine Glühdauer im Bereich von etwa 1 Stunde bis 2 Stunden meist ausreichend.

Die neuen beigebraunen Einschlußpigmente eignen sich zur Einfärbung von Glasuren. Nicht-umhüllte Eisentitanate lösen sich dagegen bei der Glasbildung auf.

Folgende Beispiele sollen das erfindungsgemäße Verfahren näher erläutern:
1. Eine Mischung aus 25 g Zirkoniumoxid (D50-Wert = 3,9 µm; spezifische Oberfläche = 5,2 m²/g), 13,5 g Siliziumdioxid, 3,5 g Kaliumchlorid, 2,5 g Magnesiumfluorid, 1,5 g Natriumhexafluorsilikat, 5 g Eisen(III)-oxid und 2,5 g Titandioxid wird nach 30-minütiger Mahlung mit einer Aufheizrate von 500 °C/h auf 1100° erhitzt und dort 1 Stunde geglüht. Es entsteht ein beigebraunes Produkt, bestehend aus Fe₂TiO₅-Kristallen, eingeschlossen in Zirkonimsilikat. Ausbeute 94 %.
2. Eine Mischung wie in Beispiel 1, wobei das Zirkoniumoxid einen D50-Wert von 3,4 µm und eine spezifische Oberfläche von 6 m²/g aufweist, wird mit 600° C/h auf 1200° C erhitzt und 1 Stunde geglüht. Man erhält ebenfalls ein beigebraunes Produkt. Ausbeute 90 %.

## Patentansprüche

1. Beigebraune Einschlußpigmente bestehend aus durchsichtigen Kristallen aus Zirkoniumsilikat, in welchen farbige Verbindungen als diskrete Phase eingeschlossen sind,
dadurch gekennzeichnet,
daß als farbige Verbindungen kristalline Eisentitanate der Zusammensetzung Fe₂TiO₅ eingeschlossen sind.

2. Verfahren zur Herstellung von beigebraunen Einschlußpigmenten gemäß Anspruch 1, durch Glühen eines zuvor gemahlenen Gemisches aus Zirkoniumoxid, Siliziumdioxid und Ausgangsverbindungen der einzuschließenden farbgebenden Verbindungen in Anwesenheit von Mineralisatoren bei 800 - 1300 °C,
dadurch gekennzeichnet,
daß man Zirkoniumoxide mit einer Korngrößenverteilung (D50-Wert) von gleich oder kleiner 5 µm und einer spezifischen Oberfläche von gleich oder größer 4 m²/g verwendet und als Ausgangsverbindungen der einzuschließenden farbgebenden Verbindung Eisen- und Titanoxide oder bei höheren Temperaturen unter oxidierenden Bedingungen Oxide bildende Eisen- und Titanverbindungen einsetzt und das verdichtete Gemisch unter oxidierenden Bedingungen 0,5 bis 8 Stunden glüht.

3. Verfahren nach Anspruch 2,
dadurch gekennzeichnet,
daß feinteilige Eisenoxide (Fe₂O₃) mit D50-Werten zwischen 0,2 und 0,7 µm und spezifischen Oberflächen zwischen 13 und 24 m²/g eingesetzt werden.

4. Verfahren nach Anspruch 2 oder 3,
dadurch gekennzeichnet,
daß pyrogene Titanoxide aus Anatas und Rutil mit wenigstens 20 Gew.% Rutilanteil eingesetzt werden.

5. Verfahren nach einem der Ansprüche 2 bis 4,
dadurch gekennzeichnet,
daß das Gemisch mit einer Aufheizrate von 400 bis 750° C/h auf die Glühtemperatur gebracht wird.

## Claims

1. Beige-brown inclusion pigments consisting of transparent crystals of zirconium silicate, in which coloured compounds are included as a discrete phase,
characterized in that
crystalline iron titanates of the composition Fe₂TiO₅ are included as coloured compounds.

2. A process for preparing beige-brown inclusion pigments according to claim 1 by ignition of a previously ground mixture of zirconium oxide, silicon dioxide and starting compounds for the colouring compounds to be included in presence of mineralizers at 800-1300 °C,
characterized in that
zirconium oxides with a particle size distribution (D50 value) of 5 µm or less and a specific surface of 4 m²/g or greater are used and, as starting compounds of the colouring compound to be included, iron and titanium oxides or iron and titanium compounds forming oxides at elevated temperatures under oxidizing conditions are used, and the compacted mixture is ignited under oxidizing conditions for 0.5 to 8 hours.

3. A process according to claim 2,
characterized in that
finely-divided iron oxides (Fe₂O₃) with D50 values between 0.2 and 0.7 µm and specific surfaces between 13 and 24 m²/g are used.

4. A process according to claim 2 or 3,
characterized in that
pyrogenic titanium oxides consisting of anatase and rutile with a rutile content of at least 20 wt% are used.

5. A process according to one of claims 2 to 4,
characterized in that
the mixture is brought to the ignition temperature at a heating rate of 400 to 750 °C/h.

## Revendications

1. Pigments d'inclusion brun-beige composés de cristaux transparents en silicate de zirconium dans lesquels des composés colorés sont inclus sous forme de phase discrète, caractérisés en ce que des titanates de fer de composition TiO₅Fe₂ cristallins sont inclus en tant que composés colorés.

2. Procédé pour l'obtention de pigments d'inclusion brun-beige selon la revendication 1, par calcination d'un mélange moulu au préalable d'oxyde de zirconium, de dioxyde de silicium, et de composés de départ des substances colorantes qui doivent être incluses en présence d'agents minéralisants à 800-1300 °C, caractérisé en ce que l'on utilise des oxydes de zirconium ayant une répartition de la taille des grains (valeur D50) égale ou plus petite que 5 x 10⁻⁶m et ayant une surface spécifique égale ou plus grande que 4 m²/g et que l'on met en oeuvre comme substances de départ de la substance colorante que l'on doit inclure, des oxydes de fer et de titane ou bien à des températures plus élevées des composés de fer et de titane qui forment dans des conditions oxydantes des oxydes et que l'on calcine le mélange comprimé dans des conditions oxydantes pendant 0,5 à 8 heures.

3. Procédé selon la revendication 2, caractérisé en ce que l'on met en oeuvre des oxydes de fer (Fe₂O₃) finement divisés ayant des valeur D50 entre 0,2 et 0,7 x 10⁻⁶m et des surfaces spécifiques entre 13 et 24 m²/g.

4. Procédé selon la revendication 2 ou la revendication 3, caractérisé en ce que l'on met en oeuvre des oxydes de titane pyrogéniques en anatase et en rutile avec une fraction de rutile d'au moins 20 % en poids.

5. Procédé selon l'une des revendications 2 à 4, caractérisé en ce que l'on amène le mélange à la température de calcination avec une vitesse de chauffage de 400 à 750°C/heure.
